# EUROPÄISCHE PATENTSCHRIFT

(11) **EP 3 312 132 B1**
(45) Veröffentlichungstag und Bekanntmachung des Hinweises auf die Patenterteilung: **09.10.2019**
(21) Anmeldenummer: 17196386.1
(22) Anmeldetag: 13.10.2017
(51) Int. Cl.: B66F 17/00, B66F 9/075, B66F 9/07, B66F 9/10, G05D 1/02

(54) **PROAKTIVES VERRINGERN VON SCHWINGUNGEN IN EINEM FLURFÖRDERZEUG**
PROACTIVE REDUCTION OF VIBRATIONS IN AN INDUSTRIAL TRUCK
RÉDUCTION DE MANIÈRE PROACTIVE DES VIBRATIONS DANS UN CHARIOT DE MANUTENTION

(30) Priorität: 24.10.2016 DE 102016220810
(43) Veröffentlichungstag der Anmeldung: 25.04.2018
(60) Teilanmeldung: 19177797.8
(73) Patentinhaber: Jungheinrich Aktiengesellschaft, 22047 Hamburg (DE)
(72) Erfinder: Magens, Ernst-Peter, 22949 Ammersbek (DE); Schmalzl, Jürgen, 85778 Haimhausen (DE); Bibernell, Hubert, 84034 Landshut (DE); Schöttke, Carsten, 85368 Moosburg (DE)
(74) Vertreter: Weickmann & Weickmann PartmbB

(56) Entgegenhaltungen:
- EP-A1- 2 368 832
- EP-A1- 3 034 455
- US-A1- 2014 216 853
- US-A1- 2014 277 871
- US-A1- 2015 291 399

## Beschreibung

Die vorliegende Erfindung betrifft ein Flurförderzeug, insbesondere einen Dreiseitenstapler, umfassend einen Fahrzeugkörper, mit dem Fahrzeugkörper über Radaufhängungen verbundene Räder, ein Hubgerüst, welches sich von dem Fahrzeugkörper im Wesentlichen vertikal erstreckt und welchem eine Mehrzahl von Anbauteilen zugeordnet ist, eine Mehrzahl von Betriebskomponenten, welche dazu eingerichtet sind, Betriebsfunktionen des Flurförderzeugs auszuführen, wenigstens eine Steuereinheit, welche dazu eingerichtet ist, die Betriebskomponenten des Flurförderzeugs anzusteuern, und wenigstens eine Erfassungsvorrichtung, welche dazu eingerichtet ist, wenigstens einen Betriebsparameter des Flurförderzeugs oder/und wenigstens einen Parameter der Umgebung des Flurförderzeugs zu erfassen.

Die vorliegende Erfindung kann mit besonderen Vorzügen Anwendung finden bei Seitenstaplern und Hochregalstaplerfahrzeugen, insbesondere bei Kommissionier-Dreiseitenstaplern, bei welchen Lasttraggabelzinken für Seitenschuboperationen quer zur Geradeausfahrrichtung des Flurförderzeugs orientiert bzw. ausrichtbar sind. Mit solchen Seitenstaplern in ihrer Bauart als Hochregalstaplerfahrzeuge lässt sich das Ein- und Ausstapeln ganzer Paletten und das Kommissionieren einzelner Artikel aus dem Hochregal mühelos verbinden. Hochregalstaplerfahrzeuge der hier betrachteten Art umfassen solche, bei denen ein Fahrerplatz einem Hubgerüst auf und abwärts bewegbar mittels eines Fahrerplatzträgers zugeordnet ist, wobei an dem Fahrerplatz an dessen Front ein Seitenschubrahmen vorgesehen ist, der zusammen mit dem Fahrerplatz an dem Hubgerüst auf und abwärts bewegbar ist und eine seitlich quer zur Geradeausfahrrichtung des Flurförderzeugs hin und her bewegbare Lasttragvorrichtung trägt. Da der Fahrerplatz mit einer sich darauf befindenden Bedienungsperson zusammen mit der Lasttragvorrichtung vertikal am Hubgerüst verfahrbar ist, bezeichnet man derartige Flurförderzeuge auch als Man-Up-Fahrzeuge oder Man-Up-Flurförderzeuge. Bei verschiedenen Bautypen von Man-Up-Flurförderzeugen ist das Hubgerüst teleskopisch ausfahrbar und einziehbar, wobei der Fahrerplatz an der am höchsten ausfahrbaren Teleskopstufe des Hubgerüsts höhenverstellbar befestigt ist.

Die in dem Seitenschubrahmen bewegbar geführte Lasttragvorrichtung kann ein Zusatzhubgerüst mit daran relativ zum Fahrerstand auf und abwärts bewegbaren Lastaufnahmemitteln umfassen, bei denen es sich üblicherweise um Lasttragzinken bzw. um eine Lasttraggabel mit solchen Lasttragzinken handelt. Das Zusatzhubgerüst ist an dem Seitenschubgerät in der Bauart als Schwenkschubgerät angeordnet und daran um eine üblicherweise vertikale Achse um ca. 180 Grad schwenkbar, so dass die an dem Zusatzhubgerüst höhenverstellbar befestigte Lasttraggabel aus einer Stellung mit Ausrichtung seitlich quer zur Geradeausfahrtrichtung des Flurförderzeugs in eine Stellung mit entgegengesetzter seitlicher Ausrichtung verschwenkt werden kann. Das Seitenschubgerät ist an dem Seitenschubrahmen linear geführt.

Es versteht sich allerdings, dass die vorliegende Erfindung auch in einfacher aufgebauten Flurförderzeugen, wie beispielsweise gewöhnlichen Gabelstaplern mit einem Teleskophubgerüst und einem nicht schwenkbar an dem Hubgerüst angeordneten Lasttragemittel vorteilhaft eingesetzt werden kann, wie sich aus den folgenden Betrachtungen ergeben wird.

Eine typische Aufgabe für die oben beschriebenen Kommissionier-Dreiseitenstapler besteht darin, eine Palette mit darauf befindlicher Last in ein Regal einzulagern, wobei sich das Flurförderzeug in einem Schmalgang zwischen Regalen eines Hochregallagers befindet und die Palette auf der Lasttraggabel aufgenommen ist. Das Einschieben der Palette in das Regal erfolgt seitlich quer zur Geradeausfahrtrichtung des Flurförderzeugs, wobei vorausgesetzt sei, dass die Lasttraggabel bereits seitlich zu dem Regal korrekt auf den gewünschten Lagerplatz ausgerichtet ist und sich das Seitenschubgerät mit dem daran vorgesehenen Zusatzhubgerüst in einer seitlichen Endstellung an dem vom betreffenden Regal entfernten Ende des Seitenschubrahmens befindet. Durch lineares seitliches Verschieben des Schwenkschubgeräts entlang des Seitenschubrahmens kann dann die beladene Palette in das Regal eingeführt werden.

Zum Betreiben der verschiedenen bewegbaren Komponenten an dem Hubgerüst sind mehrere der oben genannten Betriebskomponenten vorgesehen. Sie dienen je nach Ausstattung des Flurförderzeugs unter anderem zum Bewegen der Lastaufnahmemittel am Zusatzhubgerüst, zum Schwenken des Zusatzhubgerüsts um eine Hochachse, zum Bewegen der Lasttragvorrichtung bzw. des Seitenschubgeräts an dem Seitenschubrahmen, zum Bewegen des Fahrerplatzes am Hubgerüst und ggf. zum teleskopischen Ausfahren und Einziehen des Hubgerüsts. Üblicherweise handelt es sich hierbei in Flurförderzeugen um hydraulische Betriebskomponenten, wobei jedoch andere Antriebe wie Elektromotoren nicht ausgeschlossen sein sollen.

Es ist ein bekanntes Problem, dass bei Flurförderzeugen der hier betrachteten Art Schwingungen am Hubgerüst, insbesondere Schwingungen mit horizontal seitlichen, d. h. quer zur Geradeausfahrtrichtung des Flurförderzeugs gerichteten Schwingungskomponenten auftreten, beispielsweise bei Fahrt auf unebenem Fahruntergrund. Solche Schwingungen sind oft umso heftiger, je höher der Fahrerplatz und seine Vorbaugeräte am Hubgerüst angehoben sind und je größer die mittels der Lasttragvorrichtung ggf. aufgenommene Last ist, d.h. dass die Position und das Gewicht der Last sowohl Einfluss auf die Amplitude wie auch die Frequenz der auftretenden Schwingungen haben kann.

Derartige Schwingungsbewegungen machen eine schnelle Fahrt im Schmalgang und das Einlagern oder Auslagern von Paletten in und aus Regalen schwierig oder gar zeitweise unmöglich, so dass die Bedienperson einen Einlagerungs- oder Auslagerungsvorgang erst dann sicher einleiten kann, wenn die Schwingungen bei stehendem Flurförderzeug ausgeklungen sind. Alternativ könnte die Bedienperson des Flurförderzeugs bei Fahrt in Bereichen, in denen mit Unebenheiten am Boden zu rechnen ist, grundsätzlich mit reduzierter Geschwindigkeit fahren, um Schwingungsanregungen weitestgehend zu vermeiden. Beides würde jedoch die Produktivität bei der Arbeit mit dem Flurförderzeug senken.

Aus der EP 2 368 832 B1 ist ein als Man-Up-Fahrzeug ausgebildetes Flurförderzeug der eingangs genannten Art bekannt, bei dem bereits Maßnahmen zur Schwingungsreduzierung getroffen worden sind. Diese Maßnahmen bestehen darin, dass eine als Lastabschnitt bezeichnete, am Hubgerüst auf und ab bewegbare, den Fahrerplatz, dessen Tragstruktur und die damit verbundene Lasttragstruktur zusammenhängend umfassende Baugruppe derart mittels einer als Hilfsträger bezeichneten und unmittelbar höhenbeweglich an dem Hubgerüst befestigten, massiven Adapterplatte an dem Hubgerüst angebracht ist, dass sie insgesamt quer zur Geradeausfahrtrichtung (Hauptfahrtrichtung) des Flurförderzeugs Bewegungen mit einer seitlichen, d. h. normalerweise horizontalen Bewegungskomponente relativ zu der Adapterplatte und somit dem Hubgerüst ausführen kann, wobei hierzu ein gesonderter, nicht für den planmäßigen Betrieb des Flurförderzeugs vorgesehener Bewegungsfreiheitsgrad für die Baugruppe eingerichtet ist. Das bekannte Flurförderzeug weist Mittel zum Dämpfen oder Vermeiden von Schwingungen in der relativen Lage zwischen dem Lastaufnahmeabschnitt und dem Hubgerüst, d. h. zwischen dem Fahrerstand (Fahrerplatz) und der Adapterplatte, auf.

Dabei kann es sich um aktive, semi-aktive oder/und passive Schwingungsdämpfungsmittel handeln, die geeignet sind, eine Kraft oder ein Moment zwischen der Adapterplatte und dem Lastaufnahmeabschnitt zu erzeugen, die bzw. das eine Komponente entlang des gesonderten, nicht für den planmäßigen Betrieb des Flurförderzeugs vorgesehenen Bewegungsfreiheitsgrades hat. In der EP 2 368 832 B1 sind zur Schwingungsreduzierung unter anderem Dämpfungselemente und Federn vorgeschlagen, die einer Auslenkung des Hubgerüsts und der als Lastaufnahmeabschnitt bezeichneten Baugruppe entlang des gesonderten Bewegungsfreiheitsgrad entgegenwirken. Die massive Adapterplatte stellt jedoch ein relativ schweres Zusatzbauteil dar, welches als sogenanntes "Totgewicht" bei jedem Hubvorgang mitgehoben werden muss und außerdem das Gesamtgewicht des Flurförderzeugs entsprechend vergrößert.

Andererseits ist beispielsweise aus der EP 2 692 556 A2 ein Verfahren zum Betreiben eines zumindest semi-aktiven Fahrwerks eines Fahrzeugs bekannt, bei dem mittels einer Sensoreinheit ein Höhenprofil einer dem Fahrzeug vorausliegenden Fahrstrecke ermittelt und auf Basis des ermittelten Höhenprofils mindestens eine dem Fahrwerk des Fahrzeugs zugeordnete Aktuatoreinheit durch eine Steuereinheit proaktiv angesteuert wird, beispielsweise indem einzelne Räder, von denen erwartet wird, dass sie Schlaglöcher durchfahren werden, entlastet werden. Auf diese Weise wird die Eingabe von Schwingungen in das Fahrzeug von vornherein minimiert. Derartige vorausschauende Fahrwerke sind allerdings zum Einsatz in Flurförderzeugen nur bedingt geeignet, da diese häufig nicht mit Fahrwerken ausgestattet sind, die an die Komplexität von Fahrwerken von Personenkraftwagen oder Lastwagen heranreichen, die zur Fahrt auf öffentlichen Straßen vorgesehen sind.

Weiterhin ist aus der US 2014/0277871 A1 ein System und ein Verfahren bekannt, in welchem ein tatsächliches und/oder vorhergesagtes Verhalten eines Flurförderzeugs analysiert wird und auf Grundlage dieser Analyse wenigstens ein Leistungsparameter des Flurförderzeugs angepasst wird, wobei die Schwerpunktposition des Flurförderzeugs zum Beibehalten der Stabilität des Fahrzeugs herangezogen wird. Zudem ist aus der US 2014/0216853 A1 ein Flurförderzeug bekannt, in welchem eine Torsions-Vibrationsbewegung des Fahrzeugs um die Z-Achse mit Hilfe eines Korrektureingabemechanismus reduziert oder eliminiert wird. Aus der EP 3 034 455 A1 ist weiterhin die Verwendung eines Gyroskops und von Dehnungssensoren zur Analyse der Winkelposition, Winkelgeschwindigkeit und des Biegezustands eines Auslegers eines Luftfahrzeugs bekannt, während aus der US 2015/0291399 A1 eine Vorrichtung zum verbesserten Verzögern einer Arbeitsmaschine mit einer an einem Ausleger getragenen Last bekannt ist.

Es ist die Leistung der Erfinder der vorliegenden Erfindung, erkannt zu haben, dass sich das oben beschriebene Prinzip der proaktiven Verhinderung eines Auftretens von Schwingungen auf Flurförderzeuge in einer vorteilhaften Weise übertragen lässt, wodurch die im Flurförderzeug auftretenden Schwingungen mit einem vergleichsweise niedrigen Kosten- und Materialaufwand zuverlässig und deutlich verringert werden können. Hierzu umfasst das erfindungsgemäße Flurförderzeug ferner eine Vorhersageeinrichtung, welche betriebsmäßig sowohl mit der Erfassungsvorrichtung als auch der Steuereinheit gekoppelt und dazu eingerichtet ist, ein Auftreten von Schwingungen in einem Flurförderzeug anhand von von der Erfassungsvorrichtung gelieferten Daten, welchen den wenigstens einen Betriebsparameter des Flurförderzeugs oder/und wenigstens einen Parameter der Umgebung des Flurförderzeugs repräsentieren, vorherzusagen und die vorhergesagten Schwingungen repräsentierende Vorhersagedaten an die Steuereinheit zu liefern. Hierbei ist die Steuereinheit ferner dazu eingerichtet, anhand der Vorhersagedaten die Ansteuerung wenigstens einer der Betriebskomponenten derart anzupassen oder/und wenigstens eine dem Fahrzeugkörper oder dem Hubgerüst zugeordnete Vorrichtung zur Verringerung von Schwingungen derart anzusteuern, dass die von der Vorhersageeinheit vorhergesagten Schwingungen reduziert werden.

Da wie angesprochen im Gegensatz zu Personenkraftwagen oder Lastwagen in Flurförderzeugen das Fahrwerk nur bedingt dazu geeignet ist, proaktiv auf vorhergesagte Schwingungen zu reagieren, wird diese Aufgabe in dem erfindungsgemäßen Flurförderzeug entweder von ohnehin vorgesehenen Betriebskomponenten des Flurförderzeugs oder von speziell hierfür vorgesehenen Vorrichtungen zur Verringerung von Schwingungen, die dem Fahrzeugkörper oder dem Hubgerüst zugeordnet sind, übernommen. Die hierzu vorzunehmende Anpassung der Ansteuerung und damit des Betriebs von wenigstens einer der Betriebskomponenten umfasst hierbei nicht nur eine Anpassung eines momentan tatsächlich stattfindenden Betriebs der Betriebskomponente, sondern auch eine Inbetriebnahme der Betriebskomponente zur Reduzierung von Schwingungen, für den Fall dass diese momentan noch nicht in Betrieb ist.

Das heißt, dass beispielsweise je nach Richtung der erwarteten Schwingung einerseits ein momentan stattfindendes Ausfahren des Hubgerüsts bei Vorhersage einer in Kürze auftretenden Schwingung verlangsamt oder beschleunigt werden könnte, um der Entstehung der Schwingung entgegenzuwirken, andererseits aber beispielsweise auch ein Seitenschub des Auslegers bei Voraussage einer demnächst auftretenden Schwingung vorgenommen werden könnte, wenn dieser Seitenschub im normalen Betriebsablauf des Flurförderzeugs momentan nicht vorgesehen wäre, so dass er lediglich zur Verhinderung des Auftretens der Schwingung dient.

Sind Vorrichtungen an dem Flurförderzeug vorgesehen, die lediglich der Verringerung von Schwingungen dienen und an sich keine Funktion im normalen Betrieb des Flurförderzeugs haben, so werden diese selbstverständlich nur aktiv in Betrieb genommen, wenn in der Tat eine Schwingung vorhergesagt ist. Ein Beispiel hierfür wäre ein sogenannter "geteilter Fahrerplatzträger", in dem eine Entkopplung von Hubgerüst und Lastaufnahmevorrichtung im Bereich des Fahrerplatzträgers vorgesehen ist, die ferner aktiv mittels Aktuatoren angesteuert werden kann. Ein weiteres Beispiel wäre eine der Lastträgeranordnung zugeordnete Lastenunterlage, die beispielsweise direkt einer Lasttraggabel zugeordnet sein kann und aktiv die Last gegenüber den Gabelzinken entkoppeln kann. Ferner könnte auch an einen dem Fahrzeugkörper oder dem Hubgerüst zugeordneten rotierenden Kreisel gedacht werden, der durch seinen Drehimpuls und sein Trägheitsmoment eine Stabilisierung der entsprechenden Komponente im Raum hervorruft und dessen Rotationsgeschwindigkeit auf Grundlage der Vorhersagedaten angepasst werden könnte.

Es versteht sich, dass die Kopplung der Vorhersageeinheit mit der Steuereinheit und auch weitere Kopplungen zum Datenaustausch unter den einzelnen Komponenten des erfindungsgemäßen Flurförderzeugs über dem Fachmann bekannte Übertragungswege erfolgen kann, beispielsweise kabelgebunden oder drahtlos, und in Form geeigneter Datenformate.

Die Erfassungsvorrichtung des erfindungsgemäßen Flurförderzeugs umfasst wenigstens eine Kamera, welche vorzugsweise dazu angeordnet und eingerichtet ist, den mit den Rädern des

Flurförderzeugs zu befahrenden Untergrund in Fahrtrichtung des Flurförderzeugs zu erfassen. Hierbei kann durch die Vorhersageeinheit eine Mustererkennung durchgeführt werden, mit der Unebenheiten oder andere Hindernisse in oder auf dem Untergrund erkannt werden, wobei daraufhin dann die voraussichtlich am Flurförderzeug bei Befahren dieses Untergrundabschnitts auftretenden Schwingungen vorhergesagt werden können.

Alternativ oder zusätzlich zu dem zu befahrenden Untergrund könnten auch andere Parameter der Umgebung durch die wenigstens eine Kamera erfasst werden, wie beispielsweise Hindernisse im Höhenbereich des Hubgerüsts des Flurförderzeugs, die ein Abbremsen des Flurförderzeugs erfordern werden, wobei die durch das Abbremsen erzeugte Beschleunigung ebenfalls zu Schwingungen führen würde, denen bei korrekter Vorhersage aktiv in der oben beschriebenen Weise entgegengewirkt werden kann.

Es sei ferner festgehalten, dass die wenigstens eine Kamera nicht unbedingt durch eine optische Kamera gebildet sein muss, sondern dass der Begriff "Kamera", wie er hierin benutzt wird, auch Ultraschall- und Wärmekameras und Ähnliches umfassen kann, sowie auch komplexere Vorrichtungen wie beispielsweise Stereo-Kamerasysteme zum Aufnehmen von dreidimensionalen Bildern.

Zusätzlich kann die Erfassungsvorrichtung wenigstens ein Positionsbestimmungselement umfassen. Mit diesem Positionsbestimmungselement kann die momentane Position des Flurförderzeugs und ggf. seine Bewegungsrichtung und Bewegungsgeschwindigkeit erfasst werden, auf deren Grundlage die Vorhersageeinheit Positionen oder/und Bewegungsmuster des Flurförderzeugs identifizieren kann, die voraussichtlich zum Auftreten von Schwingungen an dem Flurförderzeug führen werden, wie beispielsweise bekannte Positionen von Unebenheiten des Untergrunds. Diese Ausführungsform ist insbesondere für Schmalgangfahrzeuge von Belang, da sich diese in der Regel nur in einem kleinen und wohldefinierten Bereich eines Regellagers bewegen, den sie häufig abfahren.

Das Positionsbestimmungselement kann beispielsweise bei einem Einsatz unter freiem Himmel auf das Globale Positionsbestimmungssystem (GPS) oder andere externe Quellen zurückgreifen, während sich bei einem Einsatz in einer Lagerhalle oder Ähnlichem darin installierte Transponder oder/und andere bekannte Vorrichtungen zur Positionsbestimmung anbieten, wie beispielsweise ein Tracking der eigenen Bewegung anhand von aufgezeichneten Fahrdaten.

Alternativ oder zusätzlich kann die Erfassungsvorrichtung des Flurförderzeugs dazu eingerichtet sein, ein Gewicht oder/und eine momentane Position einer von dem Flurförderzeug getragenen Last zu erfassen. Hierbei ist festzuhalten, dass einerseits durch die Änderung der momentanen Position der von dem Flurförderzeug getragenen Last selbst Schwingungen, beispielsweise im Hubgerüst des Flurförderzeugs, hervorgerufen können, beispielsweise bei einer schnellen Schwenkbewegung der Last mittels des Zusatzhubgerüsts um eine Hochachse, und dass andererseits die Position oder/und das Gewicht der Last ein wichtiger Eingangsparameter zum Vorhersagen von voraussichtlich an dem Flurförderzeug auftretenden Schwingungen ist, da wie bereits angesprochen insbesondere die Amplitude und Frequenz der auftretenden Schwingungen stark mit der Position und dem Gewicht der Last korreliert sind.

In einer Weiterbildung der vorliegenden Erfindung kann das erfindungsgemäße Flurförderzeug ferner eine Vorrichtung zum Erfassen von Schwingungen umfassen, welche mit der Steuereinheit oder/und der Vorhersageeinheit betriebsmäßig gekoppelt ist. Indem auf diese Weise am Flurförderzeug auftretende Schwingungen nicht nur mittels der Vorhersageeinheit vorhergesagt werden, sondern ihr tatsächliches Auftreten auch erfasst wird, ist eine Auswertung und ein Vergleich von vorhergesagten und tatsächlich aufgetretenen Schwingungen möglich, was ein lernfähiges System und somit ein kontinuierliches Verbessern von zukünftigen Vorhersagen erlaubt. Die Vorrichtung zum Erfassen von Schwingungen kann beispielsweise durch wenigstens einen dreidimensionalen Beschleunigungssensor gebildet sein, der an einer geeigneten Position an dem Flurförderzeug angeordnet ist und der Informationen sowohl über die Amplitude und Richtung als auch die Frequenz der auftretenden Schwingungen liefern kann.

Unter anderem um eine derartige Rückkopplung zwischen vorhergesagten und tatsächlich auftretenden und erfassten Schwingungen an dem Flurförderzeug zu erlauben, kann der Vorhersageeinheit, der Steuereinheit oder/und der Vorrichtung zum Erfassen von Schwingungen wenigstens eine Speichereinheit zugeordnet sein. Mittels dieser Speichereinheit können, wie bereits angesprochen, historische Daten aufgenommen und wieder ausgelesen werden, die wenigstens eine Speichereinheit kann aber zudem auch Daten für die Vorhersagen selbst enthalten und bei Bedarf liefern, beispielsweise indem in ihr Konstruktionsparameter des Flurförderzeugs abgelegt sind, sowie weitere für das Vorhersagen von Schwingungen nötige Daten, wie beispielsweise Parameter physikalischer Modelle.

In einer Ausführungsform kann wenigstens eine Betriebskomponente, deren Ansteuerung durch die Steuereinheit zur Reduzierung von vorhergesagten Schwingungen anpassbar ist, durch eine Komponente des Flurförderzeugs gebildet sein, welche einem Fahrerstand des Flurförderzeugs oder/und einer Lastaufnahmevorrichtung des Flurförderzeugs zugeordnet ist. Hierbei kann es sich beispielsweise um die oben bereits angesprochenen Seitenschubgeräte, Lastenunterlagen oder geteilten Fahrerplatzträger handeln, und allgemein gesprochen kann es sich somit um sämtliche Anbauteile des Flurförderzeugs handeln, die zwischen dem Fahrerplatzträger und der Last vorgesehen sind.

In einer möglichen Ausführungsform eines erfindungsgemäßen Flurförderzeugs können die Vorhersageeinheit und die Steuereinheit durch ein einzelnes Bauelement, wie beispielsweise einen Bordcomputer des Flurförderzeugs ausgebildet sein, das/der gegebenenfalls noch weitere Funktionen in dem Flurförderzeug übernimmt. Dieses einzelne Bauelement kann gegebenenfalls ferner wenigstens einen Teil der Funktionen der Vorrichtung zum Erfassen von Schwingungen übernehmen, beispielsweise eine Aufbereitung von Daten eines dreidimensionalen Beschleunigungssensors. Des Weiteren kann die wenigstens eine Speichereinheit ebenfalls als ein Bestandteil des einzelnen Bauelements vorgesehen sein, beispielsweise als ein dem Bordcomputer fest zugewiesener Speicher.

Ferner kann das erfindungsgemäße Flurförderzeug eine Kommunikationseinheit umfassen, welche dazu eingerichtet ist, Parameter der Umgebung des Flurförderzeugs von einer zentralen Steuereinrichtung zu erhalten oder/und Daten an die zentrale Steuereinrichtung zu liefern. Hierbei kann es sich beispielsweise um Daten über mögliche Positionen in einem von dem Flurförderzeug zu befahrenden Bereich handeln, an denen mit dem Auftreten von Schwingungsanregungen zu rechnen ist. Solche Daten könnten über die Kommunikationseinheit in regelmäßigen Abständen erhalten und von der Vorhersageeinheit zur ortsabhängigen Vorhersage von Schwingungen verwendet werden. Hierzu kann der Vorhersageeinheit beispielsweise eine elektronische Karte des zu befahrenden Bereichs in einem Speicher zur Verfügung stehen. In ähnlicher Weise könnte auch mittels der Kommunikationseinheit ein Auftreten von Schwingungen an eine zentrale Steuereinrichtung übermittelt werden, wo die entsprechenden Daten dann aufbereitet und gegebenenfalls anderen Flurförderzeugen zur Verfügung gestellt werden könnten.

Indem auf diese Weise eine Integration einzelner Flurförderzeuge mit einer zentralen Steuereinrichtung hergestellt wird, kann durch direktionalen Datenaustausch eine Art Schwarmintelligenz etabliert werden, in der beispielsweise in einem Flurförderzeug aufgenommene Daten über den Fahruntergrund von anderen Flurförderzeugen ebenfalls verwendet werden können. Die zentrale Steuereinrichtung kann beispielsweise ein übergeordnetes Logistik- oder Lagersystem sein, mit dem die einzelnen Flurförderzeuge ohnehin in Kommunikationsverbindung stehen, um Aufträge und andere Informationen zu erhalten. Somit kann auch die Aufgabe der Kommunikationseinheit durch ein ohnehin an dem Flurförderzeug vorgesehenes Bauelement mit übernommen werden.

In einem weiteren Aspekt betrifft die vorliegende Erfindung ein Verfahren zum Verringern von Schwingungen an einem Flurförderzeug, insbesondere einem Dreiseitenstapler, welches einen Fahrzeugkörper, mit dem Fahrzeugkörper über Radaufhängungen verbundene Räder, ein Hubgerüst, welches sich von dem Fahrzeugkörper im Wesentlichen vertikal erstreckt und dem eine Mehrzahl von Anbauteilen zugeordnet ist, eine Mehrzahl von Betriebskomponenten, welche dazu eingerichtet sind, Betriebsfunktionen des Flurförderzeugs auszuführen, wenigstens eine Steuereinheit, welche dazu eingerichtet ist, die Betriebskomponenten des Flurförderzeugs anzusteuern, wenigstens eine Erfassungsvorrichtung, welche wiederum wenigstens eine Kamera umfasst, und wenigstens eine Vorhersageeinheit umfasst, welche betriebsmäßig sowohl mit der Erfassungsvorrichtung als auch mit der Steuereinheit gekoppelt ist. Hierbei umfasst das Verfahren die Schritte eines Erfassens wenigstens eines Betriebsparameters des Flurförderzeugs oder/und wenigstens eines Parameters der Umgebung des Flurförderzeugs durch die Erfassungsvorrichtung, eines Vorhersagens von Schwingungen in dem Flurförderzeug anhand von von der Erfassungsvorrichtung gelieferten Daten, welche den wenigstens einen Betriebsparameter oder/und wenigstens einen Parameter der Umgebung des Flurförderzeugs repräsentieren, durch die Vorhersageeinheit, eines Lieferns der derart erzeugten Vorhersagedaten an die Steuereinheit, und eines Ansteuerns wenigstens einer der Betriebskomponenten oder/und wenigstens einer dem Fahrzeugkörper oder dem Hubgerüst zugeordneten Vorrichtung zur Verringerung von Schwingungen anhand der Vorhersagedaten derart, dass die von der Vorhersageeinheit vorhergesagten Schwingungen reduziert werden.

Hierbei kann das Vorhersagen von Schwingungen ein Vorhersagen eines Ereignisses unter Bezugnahme auf einen erfassten momentanen Ort oder/und einen erfassten momentanen Bewegungszustand des Flurförderzeugs umfassen. Hierbei ist unter dem Begriff des "Ereignisses" jede Art von Wechselwirkung des Flurförderzeugs mit seiner Umgebung oder/und jeder Betriebsvorgang des Flurförderzeugs zu verstehen, durch die oder den eine Schwingung an dem Flurförderzeug ausgelöst wird. Beispiele hierfür sind das voraussichtliche Bremsen des Flurförderzeugs an ihm vorausliegenden Kreuzungen, die Position von Fahrbahnunebenheiten in Bewegungsrichtung des Flurförderzeugs und damit verbunden der Zeitpunkt des voraussichtlichen Überfahrens der Unebenheiten und Ähnliches, wobei die entsprechenden Positionen, an denen schwingungsauslösende Ereignisse zu erwarten sind, aus einer Datenbank eingelesen werden können oder/und von dem Fahrzeug selbst erfasst werden können.

Des Weiteren kann das erfindungsgemäße Verfahren einen Schritt eines Erkundens der Umgebung des Flurförderzeugs umfassen, in welchem durch das Flurförderzeug ein Auftreten von Schwingungen in Abhängigkeit von seiner Position, seinem Bewegungszustand oder/und weiterer Betriebsparameter erfasst wird. Hierbei kann es sich um dedizierte Lernfahrten handeln, in denen das Flurförderzeug das von ihm im normalen Arbeitsbetrieb voraussichtlich zu befahrende Gebiet abfährt und auftretende Schwingungen erfasst, um auf Grundlage dieser Messungen bei einem erneuten Befahren des Gebiets Vorhersagen über dann voraussichtlich auftretende Schwingungen liefern zu können.

Derartige Lernfahrten können wiederholt durchgeführt werden, um robustere Ergebnisse zu erhalten und Varianzen aufzeichnen zu können. Lernvorgänge sind allerdings nicht nur in dedizierten Lernfahrten durchführbar, sondern können auch im tatsächlichen Betrieb des Flurförderzeugs vorgenommen werden, wobei hierdurch auch eine Reaktion auf sich verändernde Umweltbedingungen, wie z. B. neu entstehende Fahrbahnunebenheiten, vorgesehen werden kann.

Weitere Merkmale und Vorteile der vorliegenden Erfindung werden aus der nachfolgenden Beschreibung eines erfindungsgemäßen Flurförderzeugs deutlich, wenn diese zusammen mit den beiliegenden Zeichnungen betrachtet wird.

Diese zeigen im Einzelnen:
Figur 1 eine Seitenansicht eines Ausführungsbeispiels eines Flurförderzeugs, welches als Dreiseiten-Hochregalstapler ausgebildet ist; und
Figur 2 eine schematische Darstellung der zur Schwingungsreduzierung in dem Flurförderzeug aus Figur 1 vorgesehenen Komponenten.

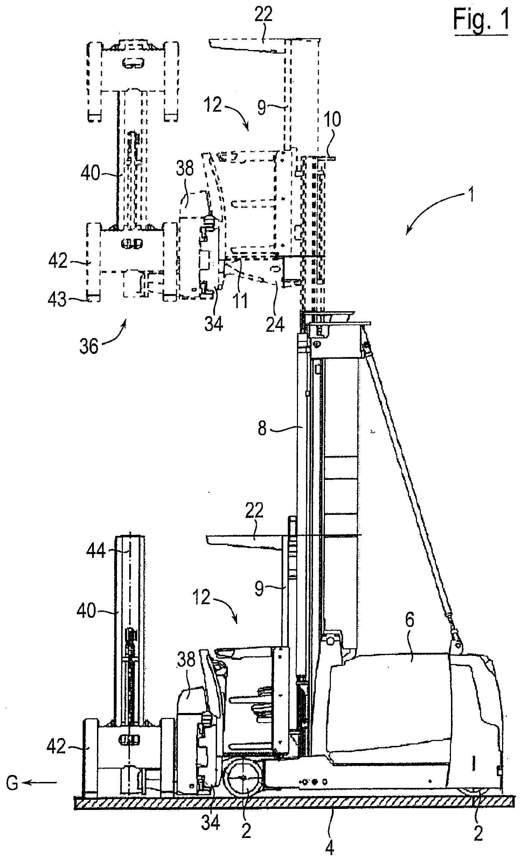

Figur 1 zeigt in einer Seitenansicht ein Ausführungsbeispiel eines Flurförderzeugs 1 gemäß der Erfindung, nämlich einen Hochregalstapler, der als Dreiseitenstapler ausgebildet ist. Das Flurförderzeug 1 ist mit an nicht gezeigten Radaufhängungen angebrachten Rädern 2 ausgerüstet, die auf dem Fahruntergrund 4 aufstehen. Die Radaufhängungen sind wiederum an einem Fahrzeugkörper 6 angebracht, an dem ebenfalls ein aufrecht stehend befestigtes Hubgerüst 8 angebracht ist. Das Hubgerüst 8 ist mehrteilig teleskopisch ausfahrbar ausgebildet, wie dies in Figur 1 anhand der mit gestrichelten Linien gezeigten Ausfahrstellung zu erkennen ist. An der am weitesten ausfahrbaren Teleskopstufe 10 des Hubgerüsts 8 ist eine Tragstruktur 9 als Fahrerplatzträger vertikal verfahrbar angebracht. Die Tragstruktur 9 weist eine vom Hubgerüst 8 in Hauptfahrrichtung G des Flurförderzeugs nach vorn abstehende Kragträgeranordnung 24 als Ausleger auf, die eine Plattform 11 eines Fahrerplatzes 12 an deren Unterseite abstützt und die an ihrem abstehenden Ende einen Seitenschubrahmen 34 trägt.

Der Fahrerplatz 12 ist als hebbare Fahrerkabine ausgestaltet, deren Rahmen mit der Fahrerplatzplattform 11 als Kabinenboden eine Rückwand, Seitenwände und ein Fahrerschutzdach 22 aufweist. In Hauptfahrrichtung G vor dem Fahrerplatz 12 ist an der Kragträgeranordnung 24 der Seitenschubrahmen 34 befestigt. Der Seitenschubrahmen 34 ist Teil einer an sich bekannten Lasttragbaugruppe 36, die ferner ein seitlich quer zur Geradeausfahrrichtung G verschiebbar an dem Seitenschubrahmen 34 angeordnetes Seitenschubgerät 38 in der Form als Schwenkschubgerät 38 mit einem vorne daran angeordneten Zusatzhubgerüst 40 aufweist, an welchem als Lastträgerelement eine Lasttraggabel 42 mit einer Gabelträgeranordnung vertikal verfahrbar ist. Das Zusatzgerüst 40 ist zusammen mit der Lasttraggabel 42 um die Hochachse 44 zwischen der in Figur 1 gezeigten Stellung mit seitlicher Ausrichtung und der Lasttraggabel 42 bzw. deren Lasttragzinken 43 (Querausrichtung nach links in Bezug auf die Geradeausfahrrichtung G) und einer Stellung mit entgegengesetzter seitlicher Ausrichtung (Querausrichtung rechts) der Lasttragzinken 43 schwenkbar.

Sämtliche dem Hubgerüst 8 und der Lasttragbaugruppe 36 zugeordneten Arbeitsfunktionen sind mittels einer nicht gezeigten Hydraulikvorrichtung betreibbar.

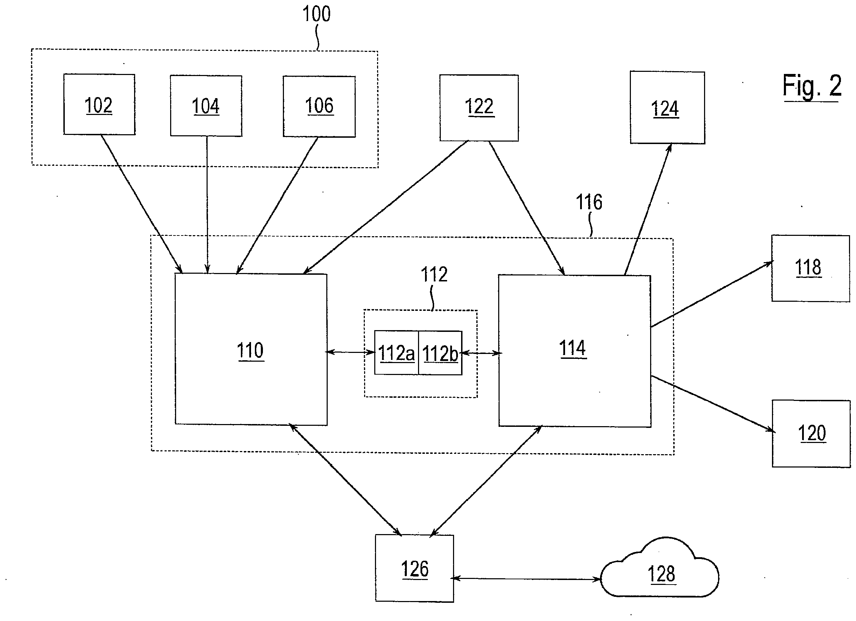

Figur 2 zeigt grob schematisch den Aufbau eines Systems zur Verringerung von Schwingungen, das im Flurförderzeug aus Figur 1 eingesetzt wird. Hierin ist mit dem Bezugszeichen 100 eine Erfassungsvorrichtung zum Erfassen von Betriebsparametern des Flurförderzeugs und von Parametern der Umgebung des Flurförderzeugs bezeichnet.

Die Erfassungsvorrichtung 100 umfasst wiederum mehrere Subsysteme bzw. Sensoren, die jeweils zur Erfassung eines einzelnen Betriebsparameters bzw. eines Aspekts der Umgebung des Flurförderzeugs eingerichtet sind. Insbesondere handelt es sich bei den einzelnen Subsystemen 102 bis 106 um eine optische oder Ultraschallkamera zur Aufnahme der Umgebung des Flurförderzeugs, insbesondere zur Aufnahme des Fahruntergrunds 4 in Hauptfahrrichtung G vor dem Flurförderzeug 1, um ein Positionsbestimmungssystem, beispielsweise einen GPS-Empfänger oder einen Empfänger für von Transpondern in einer Lagerhalle ausgesendete Peilsignale, sowie eine Vorrichtung zur Bestimmung der momentan auf der Lasttragbaugruppe 36 aufliegenden Last sowie deren Position. Die einzelnen Subsysteme 102 bis 106 der Erfassungsvorrichtung 100 übermitteln jeweils die von ihnen erfassten Parameter wiedergebende Daten in geeigneten Formaten an die Vorhersageeinheit 110.

Diese Vorhersageeinheit 110 ist dazu eingerichtet, anhand der von der Erfassungsvorrichtung 100 gelieferten Daten Ereignisse vorherzusagen, durch die in dem Flurförderzeug 1 oder wenigstens einigen Komponenten davon unerwünschte Schwingungen auftreten können. Hierbei kann es sich beispielsweise um Unebenheiten des Fahruntergrunds 4 in Geradeausfahrrichtung G vor dem Flurförderzeug 1 handeln, von denen die Vorhersageeinheit 110 bestimmt, dass das Flurförderzeug 1 sie mit einem seiner Räder 2 überfahren wird. Um diese Vorhersage-Berechnung durchführen zu können, kann die Erfassungsvorrichtung auf in einem ersten Speicherbereich 112a einer Speichervorrichtung 112 vorgehaltene Daten zurückgreifen, die beispielsweise historische Daten über das Vorliegen von Fahrbahnunebenheiten an vorbestimmten Positionen enthalten können und andererseits auch dauerhaft hinterlegte Daten, die zur korrekten Vorhersage der erweiterten Schwingung in dem Flurförderzeug notwendig sind, wie beispielsweise Parameter physikalischer Modelle und Konstruktionsdaten des Flurförderzeugs 1. Die Vorhersageeinheit 110 erzeugt auf Grundlage der von der Erfassungsvorrichtung 100 gelieferten Daten selbst wiederum Vorhersagedaten, die die erwarteten Schwingungen repräsentieren und beispielsweise den erwarteten Zeitpunkt, die erwartete Richtung und die erwartete Amplitude der Schwingungen anzeigen. Diese Vorhersagedaten liefert die Vorhersageeinheit 110 an die Steuereinheit 114.

Diese Steuereinheit 114 kann ebenfalls auf die Speichereinheit 112 zurückgreifen, wobei ihr in der Speichereinheit 112 ein zweiter Speicherbereich 112b zugeordnet ist. Die Vorhersageeinheit 110 und die Steuereinheit 114 können durch eine einzelne Datenverarbeitungseinrichtung, wie beispielsweise einen Bordcomputer des Flurförderzeugs, ausgebildet sein, was durch die gestrichelte Linie mit dem Bezugszeichen 116 in der Figur 2 angedeutet ist. Auch die Speichervorrichtung 112 kann ein Teil dieses Bordcomputers 116 sein.

Die Steuereinrichtung 114 ist dazu eingerichtet, Betriebskomponenten 118 des Flurförderzeugs zu steuern, indem Steuerungsbefehle an geeignete aktive Bauelemente ausgegeben werden, wie beispielsweise Steuerventile einer Hydraulikanlage. Die in Figur 2 mit dem Bezugszeichen 118 bezeichneten Betriebskomponenten umfassen beispielsweise die Hubfunktion des Hubgerüsts 8, das Seitenschubgerät 38 und das Zusatzhubgerüst 40 des Flurförderzeugs 1 aus Figur 1.

Anhand der von der Vorhersageeinheit 110 gelieferten Daten über erwartete Schwingungen im Flurförderzeug kann die Steuereinheit 114 unter Heranziehen von in dem zweiten Speicherabschnitt 112b abgelegten Kennfeldern die Ansteuerung der Betriebskomponenten 118 des Flurförderzeugs derart anpassen, dass die vorhergesagten Schwingungen, sobald das schwingungsauslösende Ereignis eintritt, proaktiv reduziert werden. Beispielsweise kann bei einer erwarteten Querschwingung des Hubgerüsts 8 senkrecht zur Hauptbewegungsrichtung G, die durch ein Durchfahren einer Unebenheit auf dem Fahruntergrund 4 ausgelöst wird, das Seitenschubgerät 38 dieser Schwingung bereits im Moment ihres Auftretens entgegenwirken, so dass eine Schwingungsausbreitung im Flurförderzeug 1 verhindert oder wenigstens unterdrückt wird.

Des Weiteren umfasst das erfindungsgemäße Flurförderzeug noch eine Vorrichtung 120 zur Verringerung von Schwingungen, die im Gegensatz zu den Betriebskomponenten 118 an sich keine Betriebsfunktion des Flurförderzeugs ausführt, sondern lediglich zur Verringerung der Schwingungen vorgesehen ist. Hierbei kann es sich beispielsweise um eine Vorrichtung handeln, in der die Kragträgeranordnung 24 aus Figur 1 in einen ersten Kragträgerabschnitt und einen zweiten Kragträgerabschnitt unterteilt ist, wobei der erste Kragträgerabschnitt ein erster Teil der Kragstruktur 9 ist, so dass er an dem Hubgerüst 8 mit der Kragstruktur 9 vertikal verfahrbar ist, jedoch keinen Bewegungsfreiheitsgrad horizontal quer zur Hauptfahrrichtung G des Flurförderzeugs relativ zu dem Hubgerüst 8 hat, während der zweite Kragträgerabschnitt vermittels einer Antriebsanordnung an dem ersten Kragträgerabschnitt bewegbar angeordnet ist, so dass der zweite Kragträgerabschnitt mit der daran befestigten Lastträgerbaugruppe 36 Schwingungsausgleichsbewegungen relativ zum ersten Kragträgerabschnitt und somit relativ zum Hubgerüst 8 ausführen kann.

Hierbei kann ebenfalls die Steuereinheit 114 anhand der von der Vorhersageeinheit 110 gelieferten Vorhersagedaten und weiterer aus dem zweiten Speicherabschnitt 112b ausgelesener Konstruktionsdaten des Flurförderzeugs die Vorrichtung 120 zur Verringerung von Schwingungen derart ansteuern, dass bereits während des Eintretens des schwingungsauslösenden Ereignisses diesen durch eine geeignete Relativbewegung des ersten und zweiten Kragträgerabschnitts entgegengewirkt wird.

Ferner umfasst das System aus Figur 2 eine Vorrichtung 122 zum Erfassen von Schwingungen, die sowohl mit der Steuereinheit als auch mit der Vorhersageeinheit betriebsmäßig gekoppelt ist. Diese Vorrichtung 122 zum Erfassen von Schwingungen kann beispielsweise ein dreidimensionaler Beschleunigungssensor sein, der an einer geeigneten Position des Flurförderzeugs, wie beispielsweise einer Position am Hubgerüst, am Fahrerstand oder an der Lastaufnahmevorrichtung angeordnet ist.

Durch das Vorsehen dieser Vorrichtung 122 zum Erfassen von Schwingungen ist es möglich, eine Rückkopplung in dem in Figur 2 gezeigten System vorzusehen, indem beispielsweise eine von der Vorhersageeinheit 110 vorhergesagte Schwingung mit der anschließend von der Vorrichtung 122 zum Erfassen von Schwingung erfassten Schwingung verglichen wird und ggf. Parameter in dem ersten Speicherbereich 112a, die von der Vorhersageeinheit 110 zum Vorhersagen von Schwingungen verwendet werden, angepasst werden. In ähnlicher Weise kann die Steuereinheit 114 von von der Vorrichtung 122 zum Erfassen von Schwingungen gelieferten Daten profitieren, da mit ihrer Hilfe der Erfolg der schwingungsreduzierenden Anpassung, die die Steuereinheit 114 beim Betrieb der Betriebskomponenten 118 vorgenommen hat, überprüft und ggf. angepasst und verbessert werden kann.

Des Weiteren umfasst das System aus Figur 2 eine Anzeigevorrichtung 124, die von der Steuereinrichtung 114 angesteuert wird und den Bediener des Flurförderzeugs über das voraussichtliche Auftreten von Schwingungen informieren kann, beispielsweise indem ein Warnlämpchen aufleuchtet.

Zuletzt umfasst das erfindungsgemäße System aus Figur 2 eine Kommunikationseinheit 126, die sowohl mit der Vorhersageeinheit 110 als auch mit der Steuereinheit 114 im bidirektionalen Datenaustausch steht. Vermittels dieser Kommunikationseinheit 126 sind sowohl die Vorhersageeinheit 110 als auch die Steuereinheit 114 in der Lage, mit einem übergeordneten System zu kommunizieren, das durch das Wolkensymbol 128 dargestellt ist. Mithilfe dieses übergeordneten Systems 128 können mehrere Flurförderzeuge, die sich gemeinsam in einem definierten Bereich, wie beispielsweise einem Werksgelände bewegen, durch das Prinzip der Schwarmintelligenz kooperieren. Beispielsweise kann ein erstes Flurförderzeug das Vorliegen einer Bodenunebenheit an einer bestimmten Position über seine Kommunikationseinheit an das übergeordnete System 128 melden, so dass die zentrale Instanz über das Vorliegen dieser Bodenunebenheit informiert ist. Andere auf demselben Gelände befindliche Flurförderzeuge können dann durch ihre jeweiligen Kommunikationseinheiten 126 diese Information von dem übergeordneten System 128 erhalten, was dann wiederum eine Eingabe an ihre jeweilige Vorhersageeinheit 110 darstellt, die beispielsweise auch im ersten Speicherabschnitt 112a zur späteren Verwendung abgelegt werden kann.

## Patentansprüche

1. Flurförderzeug, insbesondere Dreiseitenstapler, umfassend:
- einen Fahrzeugkörper (6);
- mit dem Fahrzeugkörper (6) über Radaufhängungen verbundene Räder (2);
- ein Hubgerüst (8), welches sich von dem Fahrzeugkörper (6) im Wesentlichen vertikal erstreckt und welchem eine Mehrzahl von Anbauteilen zugeordnet ist;
- eine Mehrzahl von Betriebskomponenten (118), welche dazu eingerichtet sind, Betriebsfunktionen des Flurförderzeugs auszuführen;
- wenigstens eine Steuereinheit (114), welche dazu eingerichtet ist, die Betriebskomponenten (118) des Flurförderzeugs anzusteuern; und
- wenigstens eine Erfassungsvorrichtung (100), welche dazu eingerichtet ist, wenigstens einen Betriebsparameter des Flurförderzeugs oder/und wenigstens einen Parameter der Umgebung des Flurförderzeugs zu erfassen;
**dadurch gekennzeichnet, dass** das Flurförderzeug ferner umfasst:
- eine Vorhersageeinheit (110), welche betriebsmäßig sowohl mit der Erfassungsvorrichtung (100) als auch der Steuereinheit (114) gekoppelt und dazu eingerichtet ist, ein Auftreten von Schwingungen an dem Flurförderzeug anhand von von der Erfassungsvorrichtung (100) gelieferten Daten, welche den wenigstens einen Betriebsparameter des Flurförderzeugs oder/und wenigstens einen Parameter der Umgebung des Flurförderzeugs repräsentieren, vorherzusagen und Vorhersagedaten an die Steuereinheit (114) zu liefern; und
die Steuereinheit (114) ferner dazu eingerichtet ist, anhand der Vorhersagedaten die Ansteuerung wenigstens einer der Betriebskomponenten (118) derart anzupassen oder/und wenigstens eine dem Fahrzeugkörper (6) oder dem Hubgerüst (8) zugeordnete Vorrichtung (120) zur Verringerung von Schwingungen derart anzusteuern, dass die von der Vorhersageeinheit (110) vorhergesagten Schwingungen reduziert werden, wobei
die Erfassungsvorrichtung (100) wenigstens eine Kamera (102) umfasst, welche vorzugsweise dazu angeordnet und eingerichtet ist, den mit den Rädern (2) des Flurförderzeugs zu befahrenden Untergrund (4) zu erfassen.

2. Flurförderzeug nach Anspruch 1, **dadurch gekennzeichnet, dass** die Erfassungsvorrichtung (100) wenigstens ein Positionsbestimmungselement (104) umfasst.

3. Flurförderzeug nach einem der vorhergehenden Ansprüche, **dadurch gekennzeichnet, dass** die Erfassungsvorrichtung (100) dazu eingerichtet ist, ein Gewicht oder/und eine momentane Position einer von dem Flurförderzeug getragenen Last zu erfassen.

4. Flurförderzeug nach einem der vorhergehenden Ansprüche, **dadurch gekennzeichnet, dass** es ferner eine Vorrichtung (122) zum Erfassen von Schwingungen umfasst, welche mit der Steuereinheit (114) oder/und der Vorhersageeinheit (110) betriebsmäßig gekoppelt ist.

5. Flurförderzeug nach einem der vorhergehenden Ansprüche, **dadurch gekennzeichnet, dass** der Vorhersageeinheit (110), der Steuereinheit (114) oder/und der Vorrichtung (122) zum Erfassen von Schwingungen wenigstens eine Speichereinheit (112) zugeordnet ist.

6. Flurförderzeug nach einem der vorhergehenden Ansprüche, **dadurch gekennzeichnet, dass** wenigstens eine Betriebskomponente (118), deren Ansteuerung durch die Steuereinheit (114) zur Reduzierung von vorhergesagten Schwingungen anpassbar ist, durch eine Komponente des Flurförderzeugs gebildet ist, welche einem Fahrerstand (12) des Flurförderzeugs oder einer Lastaufnahmevorrichtung (42) des Flurförderzeugs zugeordnet ist.

7. Flurförderzeug nach einem der vorhergehenden Ansprüche, **dadurch gekennzeichnet, dass** die Vorhersageeinheit (110) und die Steuereinheit (114) durch ein einzelnes Bauelement (116), wie beispielsweise einen Bordcomputer des Flurförderzeugs, ausgebildet sind.

8. Flurförderzeug nach einem der vorhergehenden Ansprüche, **dadurch gekennzeichnet, dass** es ferner eine Kommunikationseinheit (126) umfasst, welche dazu eingerichtet ist, Parameter der Umgebung des Flurförderzeugs von einer zentralen Steuereinrichtung (128) zu erhalten oder/und Daten an die zentrale Steuereinrichtung (128) zu liefern.

9. Verfahren zum Verringern von Schwingungen an einem Flurförderzeug (1), insbesondere einem Dreiseitenstapler, welches umfasst:
- einen Fahrzeugkörper (6);
- mit dem Fahrzeugkörper (6) über Radaufhängungen verbundene Räder (2);
- ein Hubgerüst (8), welches sich von dem Fahrzeugkörper (6) im Wesentlichen vertikal erstreckt und welchem eine Mehrzahl von Anbauteilen zugeordnet ist;
- eine Mehrzahl von Betriebskomponenten (118), welche dazu eingerichtet sind, Betriebsfunktionen des Flurförderzeugs (1) auszuführen;
- wenigstens eine Steuereinheit (114), welche dazu eingerichtet ist, die Betriebskomponenten (118) des Flurförderzeugs (1) anzusteuern;
- wenigstens eine Erfassungsvorrichtung (100), welche wenigstens eine Kamera (102) umfasst, welche vorzugsweise dazu angeordnet und eingerichtet ist, den mit den Rädern (82) des Flurförderzeugs zu befahrenden Untergrund (4) zu erfassen, und
- eine Vorhersageeinheit (110), welche betriebsmäßig sowohl mit der Erfassungsvorrichtung (100) als auch der Steuereinheit (114) gekoppelt ist;
wobei das Verfahren die folgenden Schritte umfasst:
- ein Erfassen wenigstens eines Betriebsparameters des Flurförderzeugs (1) oder/und wenigstens eines Parameters der Umgebung des Flurförderzeugs (1) durch die Erfassungsvorrichtung (100);
- ein Vorhersagen von Schwingungen an dem Flurförderzeug (1) anhand von von der Erfassungsvorrichtung (100) gelieferten Daten, welche den wenigstens einen Betriebsparameter des Flurförderzeugs (1) oder/und wenigstens einen Parameter der Umgebung des Flurförderzeugs (1) repräsentieren, durch die Vorhersageeinheit (110);
- ein Liefern der derart erzeugten Vorhersagedaten an die Steuereinheit (114); und
- ein Ansteuern wenigstens einer der Betriebskomponenten (118) oder/und wenigstens einer dem Fahrzeugkörper (6) oder dem Hubgerüst (8) zugeordneten Vorrichtung (120) zur Verringerung von Schwingungen anhand der Vorhersagedaten derart, dass die von der Vorhersageeinheit (110) vorhergesagten Schwingungen reduziert werden.

10. Verfahren nach dem vorhergehenden Anspruch, **dadurch gekennzeichnet, dass** das Vorhersagen von Schwingungen ein Vorhersagen eines Ereignisses unter Bezugnahme auf den erfassten momentanen Ort und/oder den erfassten momentanen Bewegungszustand des Flurförderzeugs (1) umfasst.

11. Verfahren nach dem vorhergehenden Anspruch, **dadurch gekennzeichnet, dass** es einen Schritt eines Erkundens der Umgebung des Flurförderzeugs (1) umfasst, in welchem durch das Flurförderzeug (1) ein Auftreten von Schwingungen in Abhängigkeit von seiner Position, seinem Bewegungszustand oder/und weiterer Betriebsparameter erfasst wird.

## Claims

1. Industrial truck, in particular a three-way forklift, comprising:
- a vehicle body (6);
- wheels (2) connected to the vehicle body (6) by means of wheel suspensions;
- a mast (8), which extends substantially vertically from the vehicle body (6) and with which a plurality of attachments are associated;
- a plurality of operating components (118), which are designed to carry out operating functions of the industrial truck;
- at least one control unit (114), which is designed to actuate the operating components (118) of the industrial truck; and
- at least one detection device (100), which is designed to detect at least one operating parameter of the industrial truck and/or at least one parameter of the surroundings of the industrial truck;
**characterised in that** the industrial truck further comprises:
- a prediction unit (110), which is operatively coupled to both the detection device (100) and the control unit (114) and is designed to predict an occurrence of vibrations on the industrial truck on the basis of data supplied by the detection device (100), which data represent the at least one operating parameter of the industrial truck and/or at least one parameter of the surroundings of the industrial truck, and to supply prediction data to the control unit (114); and
the control unit (114) is further designed to adjust the actuation of at least one of the operating components (118) on the basis of the prediction data in such a way and/or to actuate at least one device (120), associated with the vehicle body (6) or the mast (8), for reducing vibrations in such a way that the vibrations predicted by the prediction unit (110) are reduced,
the detection device (100) comprising at least one camera (102) which is preferably arranged and designed to detect the ground (4) to be travelled on by the wheels (2) of the industrial truck.

2. Industrial truck according to claim 1, **characterised in that**
the detection device (100) comprises at least one position-determining element (104).

3. Industrial truck according to either of the preceding claims, **characterised in that**
the detection device (100) is designed to detect a weight and/or a current position of a load carried by the industrial truck.

4. Industrial truck according to any of the preceding claims, **characterised in that**
it further comprises a device (122) for detecting vibrations, which is operatively coupled to the control unit (114) and/or the prediction unit (110).

5. Industrial truck according to any of the preceding claims, **characterised in that**
at least one memory unit (112) is associated with the prediction unit (110), the control unit (114) and/or the device (122) for detecting vibrations.

6. Industrial truck according to any of the preceding claims, **characterised in that**
at least one operating component (118), the actuation of which can be adjusted by the control unit (114) in order to reduce predicted oscillations, is formed by a component of the industrial truck which is associated with an operator platform (12) of the industrial truck or with a load-receiving device (42) of the industrial truck.

7. Industrial truck according to any of the preceding claims, **characterised in that**
the prediction unit (110) and the control unit (114) are formed by a single component part (116), such as an on-board computer of the industrial truck.

8. Industrial truck according to any of the preceding claims, **characterised in that**
it further comprises a communication unit (126) which is designed to receive parameters of the surroundings of the industrial truck from a central control device (128) and/or to supply data to the central control device (128).

9. Method for reducing vibrations on an industrial truck (1), in particular a three-way forklift, comprising:
- a vehicle body (6);
- wheels (2) connected to the vehicle body (6) by means of wheel suspensions;
- a mast (8), which extends substantially vertically from the vehicle body (6) and with which a plurality of attachments are associated;
- a plurality of operating components (118), which are designed to carry out operating functions of the industrial truck (1);
- at least one control unit (114), which is designed to actuate the operating components (118) of the industrial truck (1);
- at least one detection device (100), which comprises at least one camera (102) which is preferably arranged and designed so as to detect the ground (4) to be travelled on by the wheels (82) of the industrial truck and
- a prediction unit (110), which is operatively coupled to both the detection device (100) and the control unit (114); wherein the method comprises the following steps:
- detecting at least one operating parameter of the industrial truck (1) and/or at least one parameter of the surroundings of the industrial truck (1) by means of the detection device (100);
- predicting vibrations on the industrial truck (1) by means of the prediction unit (110) on the basis of data supplied by the detection device (100), which data represent the at least one operating parameter of the industrial truck (1) and/or at least one parameter of the surroundings of the industrial truck (1);
- supplying the prediction data generated in this way to the control unit (114); and
- actuating at least one of the operating components (118) and/or at least one device (120), associated with the vehicle body (6) or the mast (8), for reducing vibrations on the basis of the prediction data such that the vibrations predicted by the prediction unit (110) are reduced.

10. Method according to the preceding claim, **characterised in that**
the prediction of vibrations comprises predicting an event with reference to the detected current location and/or the detected current state of motion of the industrial truck (1).

11. Method according to the preceding claim, **characterised in that**
it comprises a step of exploring the surroundings of the industrial truck (1) in which the industrial truck (1) detects an occurrence of vibrations depending on its position, its state of motion and/or further operating parameters.

## Revendications

1. Chariot de manutention, en particulier chariot élévateur à trois côtés, comprenant :
- un corps de véhicule (6) ;
- des roues (2) reliées au corps de véhicule (6) par l'intermédiaire de suspensions de roues ;
- un châssis de levage (8), lequel s'étend de manière sensiblement verticale depuis le corps de véhicule (6) et auquel sont associés une pluralité de composants;
- une pluralité de composantes fonctionnelles (118), lesquelles sont configurées pour exécuter des fonctionnalités du chariot de manutention ;
- au moins une unité de commande (114), laquelle est configurée pour piloter les composantes fonctionnelles (118) du chariot de manutention ; et
- au moins un dispositif de détection (100), lequel est configuré pour détecter au moins un paramètre de fonctionnement du chariot de manutention et/ou au moins un paramètre de l'environnement du chariot de manutention ;
**caractérisé en ce que** le chariot de manutention comprend en outre :
- une unité de prévision (110), laquelle est couplée de manière opérationnelle à la fois au dispositif de détection (100) et à l'unité de commande (114) et est configurée pour prévoir une apparition de vibrations au niveau du chariot de manutention à l'aide de données fournies par le dispositif de détection (100), lesquelles représentent l'au moins un paramètre de fonctionnement du chariot de manutention et/ou au moins un paramètre de l'environnement du chariot de manutention et pour fournir des données de prévision à l'unité de commande (114) ; et
l'unité de commande (114) est en outre configurée pour adapter, à l'aide des données de prévision, le pilotage d'au moins une des composantes fonctionnelles (118) et/ou pour piloter au moins un dispositif (120) associé au corps de véhicule (6) ou au châssis de levage (8) servant à réduire des vibrations de telle manière que les vibrations prévues par l'unité de prévision (110) sont réduites, dans lequel le dispositif de détection (100) comprend au moins une caméra (102), laquelle est disposée et configurée de préférence pour détecter le sol (4) devant être emprunté par les roues (2) du chariot de manutention.

2. Chariot de manutention selon la revendication 1, **caractérisé en ce que** le dispositif de détection (100) comprend au moins un élément de détermination de position (104).

3. Chariot de manutention selon l'une quelconque des revendications précédentes, **caractérisé en ce que** le dispositif de détection (100) est configuré pour détecter un poids et/ou une position instantanée d'une charge portée par le chariot de manutention.

4. Chariot de manutention selon l'une quelconque des revendications précédentes, **caractérisé en ce qu'**il comprend en outre un dispositif (122) servant à détecter des vibrations, lequel est couplé de manière opérationnelle à l'unité de commande (114) et/ou à l'unité de prévision (110).

5. Chariot de manutention selon l'une quelconque des revendications précédentes, **caractérisé en ce qu'**au moins une unité de mémorisation (112) est associée à l'unité de prévision (110), à l'unité de commande (114) et/ou au dispositif (122) servant à détecter des vibrations.

6. Chariot de manutention selon l'une quelconque des revendications précédentes, **caractérisé en ce qu'**au moins une composante fonctionnelle (118), dont le pilotage peut être adapté par l'unité de commande (114) pour réduire des vibrations prévues, est formée par une composante du chariot de manutention, laquelle est associée à un poste de conduite (12) du chariot de manutention ou à un dispositif de réception de charges (42) du chariot de manutention.

7. Chariot de manutention selon l'une quelconque des revendications précédentes, **caractérisé en ce que** l'unité de prévision (110) et l'unité de commande (114) sont formées par un unique composant (116), par exemple un ordinateur de bord du chariot de manutention.

8. Chariot de manutention selon l'une quelconque des revendications précédentes, **caractérisé en ce qu'**il comprend en outre une unité de communication (126), laquelle est configurée pour recevoir d'un système de commande (128) central des paramètres de l'environnement du chariot de manutention et/ou pour fournir des données au système de commande (128) central.

9. Procédé servant à réduire des vibrations au niveau d'un chariot de manutention (1), en particulier au niveau d'un chariot élévateur à trois côtés, lequel comprend :
- un corps de véhicule (6) ;
- des roues (2) reliées au corps de véhicule (6) par l'intermédiaire de suspensions de roues ;
- un châssis de levage (8), lequel s'étend de manière sensiblement verticale depuis le corps de véhicule (6) et auquel sont associés une pluralité de composants;
- une pluralité de composantes fonctionnelles (118), lesquelles sont configurées pour exécuter des fonctionnalités du chariot de manutention (1) ;
- au moins une unité de commande (114), laquelle est configurées pour piloter les composantes fonctionnelles (118) du chariot de manutention (1) ;
- au moins un dispositif de détection (100), lequel comprend au moins une caméra (102), laquelle est disposée et configurée de préférence pour détecter le sol (4) devant être emprunté par les roues (82) du chariot de manutention, et
- une unité de prévision (110), laquelle est couplée de manière opérationnelle à la fois au dispositif de détection (100) et à l'unité de commande (114) ;
dans lequel le procédé comprend les étapes suivantes :
- une détection d'au moins un paramètre de fonctionnement du chariot de manutention (1) et/ou d'au moins un paramètre de l'environnement du chariot de manutention (1) par le dispositif de détection (100) ;
- une prévision de vibrations au niveau du chariot de manutention (1) à l'aide de données fournies par le dispositif de détection (100), lesquelles représentent l'au moins un paramètre de fonctionnement du chariot de manutention (1) et/ou au moins un paramètre de l'environnement du chariot de manutention (1), par l'unité de prévision (110) ;
- une fourniture des données de prévision générées de cette manière à l'unité de commande (114) ; et
- un pilotage d'au moins une des composantes fonctionnelles (118) et/ou d'au moins un dispositif (120) associé au corps de véhicule (6) ou au châssis de levage (8) servant à réduire des vibrations à l'aide des données de prévision de telle manière que les vibrations prévues par l'unité de prévision (110) sont réduites.

10. Procédé selon la revendication précédente, **caractérisé en ce que** la prévision de vibrations comprend une prévision d'un événement en tenant compte de la localisation instantanée détectée et/ou de l'état de déplacement instantané détecté du chariot de manutention (1).

11. Procédé selon la revendication précédente, **caractérisé en ce qu'**il comprend une étape d'une exploration de l'environnement du chariot de manutention (1), lors de laquelle une apparition de vibrations est détectée par le chariot de manutention (1) en fonction de sa position, de son état de déplacement et/ou d'autres paramètres de fonctionnement.
